# EUROPEAN PATENT SPECIFICATION

(11) **EP 2 724 022 B1**
(45) Date of publication and mention of the grant of the patent: **08.04.2015**
(21) Application number: 12750828.1
(22) Date of filing: 31.07.2012
(51) Int. Cl.: F03D 11/00

(54) **WIND TURBINE WITH VENTILATION ARRANGEMENT**
WINDTURBINE MIT LÜFTUNGSANORDNUNG
ÉOLIENNE AVEC SYSTÈME DE VENTILATION

(43) Date of publication of application: 30.04.2014
(73) Proprietor: MITSUBISHI HEAVY INDUSTRIES, LTD., Tokyo 108-8215 (JP)
(72) Inventor: AKASHI, Yu, Tokyo 108-8215 (JP); ZAEHR, Matthias, London, Greater London W1K 6WL (GB); HILLER, Michael, London, Greater London W1K 6WL (GB); DUDEN, Heinrich, London, Greater London W1K 6WL (GB); GLINDEMANN, Henning, London, Greater London W1K 6WL (GB)
(74) Representative: RGTH
(86) International application number: PCT/JP2012/004861
(87) International publication number: WO 2014/020639

(56) References cited:
- EP-A1- 2 194 269
- EP-A2- 2 034 181
- EP-B1- 1 669 596
- DE-A1-102007 043 503
- US-A1- 2009 108 690
- US-A1- 2011 163 545
- US-A1- 2011 241 353

## Description

### [Technical Field]

The disclosure relates to a wind turbine generator.

### [Background Art]

Wind turbine generators comprise numerous electric components emitting heat during operation. Many of these components are placed in the hub of the wind turbine generator, such as pitch motors or control systems. This locally concentrated positioning of many electrical components in the hub typically leads to a significant heating of the interior hub space. Since each of the electrical components has a maximum operating temperature, sufficient ventilation has to be provided for the hub in order to ensure a smooth and undisturbed operation, in particular if the components are subjected to high loads and/or if the outside temperatures are relatively high, for example during summer.

One aspect which has to be critically considered when designing a ventilation system is preventing water from entering the inside of the hub since it could significantly damage the electrical components disposed therein. Another design parameter is that a sufficient amount of air is allowed entrance to the inside of the hub for achieving a sufficient cooling effect.

From EP 1 669 596 B1 an aeration equipment is known which comprises a cup-shaped element and a pipe-shaped connection piece wherein the entrance opening of the pipe-shaped connection piece is arranged in the interior space of the cup-shaped element. This is supposed to prevent the entrance of water and dust since the air has to repeatedly reverse its movement of direction.

US 2009/108690 A1 discloses an apparatus for the ventilation of a rotor hub of a wind energy plant comprising a cup-shaped ventilation cap.

DE 10 2007 043 503 A1 discloses a switch cupboard of a wind turbine generator with a ventilation system.

In EP 1 669 596 B1 an aeration equipment for a rotor hub comprising a pipe-shaped connection element and a cup-shaped element is disclosed.

EP 2 194 269 A1 discloses a controlling mechanism for the temperature in a rotor head of a wind turbine generator.

In EP 2 034 181 A2 a ventilation system for a wind turbine generator is disclosed.

### [Summary of Invention]

It is an object of some embodiments of the present invention to provide an enhanced ventilation system by preventing disturbing water, dust or any other particles from entering the hub whilst at the same time ensuring a sufficient air flow into the interior space of the hub.

According to some embodiments of the present invention, the wind turbine generator comprises a hub with an interior hub space, a nose cone with a nose cone wall and a ventilation system for ventilating the hub of the wind turbine generator. Typically, the hub comprises a hub wall and a rotation axis around which the hub rotates during operation of the wind turbine generator. The interior hub space is defined as the cavity created by the hub wall. The nose cone wall envelopes the hub and comprises a deepening. In addition, the ventilation system comprises air flow means for directing air from outside of the hub towards the interior hub space. Preferably, the air flow means direct air from outside the nose cone towards the interior hub space. The air flow means comprise an entrance section for the entrance of air from outside the hub or outside the nose cone into the air flow means. Once the air enters the air flow means, the air is directed towards the interior space of the hub. The term "directing towards the hub" refers to the fact that the air flow means direct air into the direction of the hub. Preferably, the air flow means direct air not only towards the hub but into the interior hub space. Especially preferably, this is achieved by arranging the air flow means such that they extend into the interior hub space.

The ventilation system further comprises air diverting means comprising ends facing the entrance section of the air flow means for diverting air from outside of the nose cone towards the deepening of the nose cone wall. The air diverting means is preferably disposed in front of the air flow means in main flow direction. Some water contained in the air which is diverted by the air diverting means, in particular the first wall element of the air diverting means, will stick to the air diverting means, drip off onto the remaining parts of the nose cone wall not forming the deepening and therefore not enter the interior space of the deepening of the nose cone wall. In a direction transverse to the rotation axis of the hub the dimensions of the air diverting means preferably exceed the dimensions of the air flow means, in particular the dimensions of the entrance section of the air flow means, so that the air diverting means is adapted to cover substantially the entire, further preferably the entire, entrance section of the air flow means. Covering does not signify that the air diverting means are necessarily in direct contact with the entrance section of the air flow means. Preferably, the air diverting means are arranged in main flow direction in front of the air flow means and its dimensions in a direction transverse to the hub rotation axis exceed the dimensions of the air flow means so that the air diverting means prevent a direct air flow, i.e. without any diversion, into the air flow means. The air diverting means are preferably arranged at a distance to the entrance section, preferably by mounting means which mount the air diverting means at the air flow means or the nose cone wall. Preferably, in a direction transverse to the rotation axis of the hub the dimensions of the air diverting means increase in main flow direction which is substantially parallel to the rotation axis of the hub.

Further preferably, the air diverting means comprise a first wall element and a second wall element. The first wall element is in particular arranged substantially perpendicular to the rotation axis of the hub while the second wall element is preferably disposed substantially parallel to the rotation axis of the hub. The first wall element and the second wall element are preferably fixedly mounted to each other, further preferably in such a way that the first wall element forms a bottom and the second wall element forms a circumferential side wall of said bottom. In particular, the first and the second wall element are formed integrally. Further preferably, in a direction transverse to the rotation axis of the hub the dimensions of the second wall element increase in main flow direction.

The air flow means of the ventilation system are disposed at a distance to the air diverting means such that the air flow means are not disposed in an interior space of the air diverting means. Preferably, the air diverting means are disposed at a distance to the entrance section of the air flow means which amounts to at least 5 percent, further preferably at least 10 percent, of the dimensions of the entrance section of the air flow means. Preferably, the entrance section of the air flow means is designed circular so that in this case the air diverting means are preferably disposed at a distance to the entrance section of the air flow means amounting to at least 5 percent, further preferably at least 10 percent, of the diameter of the entrance section of the air flow means.

Alternatively, the air flow means are arranged conterminous to the air diverting means but not in the interior space of the air diverting means such that the entrance section of the air flow means ends at flush level at an imaginary line connecting the ends of the air diverting means facing the entrance section of the air flow means. In the case that the air diverting means comprise a first wall element and a circumferential second wall element, the entrance section of the air flow means ends at flush level at an imaginary line connecting the ends of the second wall element facing the entrance section of the air flow means.

The deepening in the nose cone wall, the entrance section of the air flow means and the air diverting means together define an air channel system for directing air from the outside of the wind turbine generator into the air flow means. In particular, the outside of the wind turbine generator signifies the outside of the nose cone. The term "air channel system" signifies at least one air channel which leads from an air inlet section of the air channel system towards the interior hub space. In particular, the air channel system comprises multiple air channel sections which are preferably directed into different directions. These air channel sections are connected to each other in such a way that a continuous air flow through the air channel system is ensured. In this way, air is deflected and thus directed through the air channel system. By providing an air channel system which forces the air to multiple change in its direction of flow, water and other disturbing particles are prevented from entering the entrance section of the air flow means. Since the inertia of water or other disturbing particles is much higher than the one of air, water and other disturbing particles will most likely not reach the entrance section of the air flow means. In contrast, the water will stick to the walls of the air channel system deflecting the air flow and will due to the design of the deepening, whose dimensions decrease in main flow direction, move along the nose cone wall against the main flow direction to an outside of the deepening.

In some embodiments of the invention, the air channel system is designed in such a way that it repeatedly deflects air entering the air channel system from the outside of the nose cone, further referred to as "incoming air". In this way, the direction of flow from incoming air is changed multiple times, i.e. at least two times, until the air enters the air flow means. Further preferably, the air channel system repeatedly reverses the direction of flow of incoming air. Reversing the direction of flow signifies that the angle between the new direction of flow after deflection and the former direction of flow before deflection amounts to more than 90 degrees, further preferably at least 135 degrees and even more preferably about 180 degrees.

According to a further embodiment of the invention, the air flow means comprise at least one air duct, in particular a flexible hose, which is arranged in an opening in the nose cone wall. Through said opening in the nose cone wall air can enter from outside the nose cone into the air flow means towards the interior hub space. The term "flexible" refers to the feature that the hose, which is preferably tube-shaped, changes its shape if sufficient external forces are applied. In addition or alternatively, the air flow means comprise a flow guiding element, in particular a baffle plate or a collar, arranged outside of an opening in the nose cone wall which collects incoming air by deflection and guides it further into the air flow means.

Preferably, the at least one air duct extends continuously from the opening in the nose cone wall to at least a hub opening in the hub wall. Through the hub opening in the hub wall air can enter into the interior hub space from outside the hub. Alternatively, the air flow means consist of several components such as air ducts which together extend continuously from the opening in the nose cone wall to at least a hub opening in the hub. Further preferably, the air flow means or the at least one air duct extend continuously beyond an opening in the hub protruding into the interior hub space.

Further preferably, the opening in the nose cone wall is disposed within the deepening of the nose cone wall. The deepening of the nose cone wall is defined as a depression in the nose cone wall. This depression deviates from the overall typically round form/shape of the nose cone wall. Further preferably, the deepening is designed as a circular indention in the nose cone wall. In particular, in a direction transverse to the rotation axis of the hub the dimensions of the deepening decrease, preferably taper, in main flow direction of the air, i.e. towards the hub. The main flow direction of the air is substantially parallel to the rotation axis of the hub which at the same time is also the rotation axis of the nose cone. The fact that the opening is arranged in the interior space of the deepening means that part of the nose cone wall forming the deepening is missing so that an opening to the interior space of the nose cone is formed.

According to a further embodiment, the air flow means comprise suction means for sucking air from the outside of the wind turbine generator into the air flow means. This suction means provide an active ventilation since air is actively sucked into the air flow means. Preferably, these suction means comprise a fan unit which creates a negative pressure at the entrance section of the air flow means or even further at an air inlet section of the air channel system. Further preferably, the suction means are adapted to control an air flow in the air flow means in dependence on at least one parameter. This at least one parameter is derived from measurements in the interior hub space. In particular, the parameter is a temperature or a temperature rate of the interior hub space. In this way, the ventilation of the interior hub space can be adjusted according to parameters in the hub. In particular, the ventilation could be adapted to a temperature change in the hub, especially a temperature increase which could result from enhanced loads on the electrical components in the hub. This embodiment is advantageous since it ensures a very effective ventilation of the hub by the capability of adapting its operation to the actual situation in the hub.

According to a further embodiment of the invention, the air diverting means are adapted to cover the entire deepening of the nose cone wall. Preferably, in a direction transverse to the rotation axis of the hub the maximum dimensions of the air diverting means exceed the maximum transverse dimension of the deepening. One of the purposes of the air diverting means is to prevent water or any other disturbing particles to enter the interior space of the nose cone. By being arranged in main flow direction in front of the entire deepening of the nose cone wall a substantial part of the water contained in the air is prevented from entering the interior space of the deepening or the interior space of the nose cone.

In a further preferred embodiment, the deepening of the nose cone wall is arranged in proximity to the entrance section of the air flow means. Even more preferably, the deepening comprises an interior space and the entrance section of the airflow means is disposed in said interior space. The interior space of the deepening is defined by the part of the nose cone wall forming the deepening and an imaginary line connecting the opposing parts of the nose cone wall being disposed adjacent to the deepening which do not form the deepening. The entrance section of the air flow means protrudes into the interior space of the deepening of the nose cone wall. This means that the entrance section of the air flow means is disposed in the interior space of the deepening.

In a further embodiment, the air diverting means are at least partly disposed in the interior space of the deepening. Further preferably, the air diverting means are completely disposed in the interior space of the deepening. In particular, both the air diverting means and the entrance section of the air flow means protrude into the interior space of the deepening, the air diverting means preferably protruding from the side of the deepening facing the outside of the nose cone, while the entrance section of the air flow means preferably protrudes from the side of the deepening directed to the hub.

According to another embodiment of the invention, the air flow means comprise a diameter which decreases from the entrance section of the airflow means in main flow direction of the air. In particular, the diameter of the flow guiding means decreases in main flow direction. Preferably, the diameter of the air flow means tapers in main flow direction. Consequently, in a direction transverse to the rotation axis of the hub the dimensions of the deepening and the air flow means taper in opposite direction to the transverse dimensions of the air diverting means.

Preferably, the air diverting means and the nose cone wall define an air inlet section of the air channel system, wherein said air inlet section is disposed substantially perpendicular to the rotation axis of the hub. Typically, wind hits the wind turbine generator in particular the nose cone, in such a way that the wind direction is substantially parallel to the rotation axis of the hub. By arranging the air inlet section perpendicular to the wind direction, water and other disturbing particles are further prevented from entering the interior hub space since they have to change their flow direction significantly in order to enter the air channel system and will most likely not reach the air inlet section due to their inertia being much higher compared to air.

In another embodiment of the invention, the air flow means comprise filter means for filtering the air flowing from outside the nose cone towards the interior hub space. This filter means can for example be a simple filter mat or any other more sophisticated filter means such as an electrostatic filter. Preferably, the filter means comprise a desalination filter which is especially important for offshore wind turbine generators. Apart from salt, the filter means preferably remove dust or any other disturbing particles from the air.

Further preferably, the ventilation system comprises supporting means for mounting the air flow means. These supporting means which can itself be mounted anywhere at the wind turbine generator, such as the nose cone or the hub, mount the airflow means in a fixed position.

According to a further embodiment of the invention, the ventilation system comprises outlet means in order to provide an air outlet from the interior hub space. By means of these air outlet means hot air which has been heated from the heat radiated from the electrical components in the hub can exit the interior hub space so that cool air from outside the nose cone can enter the interior hub space, preferably by the air flow means. By means of the combination of the air flow means and the air outlet means outside air is allowed entrance into the interior hub space, while heated air can escape the interior hub space so that effective ventilation is ensured. Further preferably, the air outlet means are designed as a cavity in a hollow main shaft of the wind turbine generator. Alternatively, the air outlet means are designed as openings in the hub wall. In both cases, hot air can escape the interior hub space to an outside of the hub.

According to some embodiments of the invention, a wind turbine generator comprises a hub and a nose cone with a nose cone wall and an interior nose cone space. The nose cone wall envelopes the hub. In the nose cone wall an opening is provided. Preferably, the opening is designed circular. Furthermore, the wind turbine generator comprises a ventilation system for ventilating the hub of the wind turbine generator, wherein the ventilation system comprises air diverting means for diverting air from the outside of the nose cone and/or air which has already entered the interior nose cone space. Preferably, the air diverting means cover substantially the entire opening in the nose cone wall, further preferably the entire opening, is covered by the air diverting means. Covering does not signify that the air diverting means necessarily have to be disposed in the opening in the nose cone wall or close the opening in the nose cone wall. The air diverting means can be arranged at a distance to the opening. According to some embodiments of the invention, the air diverting means are at least partly disposed in the interior nose cone space which is defined as the cavity formed by the nose cone wall. In this way, the air diverting means preferably direct at least air which has already entered the interior nose cone space towards the interior hub space.

In a further embodiment of the invention, a part of the air diverting means protrude from the interior nose cone space to the outside of the nose cone. Preferably, in a direction parallel to the hub rotation axis at least 5 percent, further preferably at least 10 percent, most preferably at least 15 percent, of the dimensions of the air flow means protrude to the outside of the nose cone. By protruding to the outside, the air diverting means preferably direct at least air from outside the nose cone into the interior space of the nose cone.

Alternatively, the air diverting means are entirely disposed in the interior nose cone space. Preferably, the air diverting means are mounted by mounting means which are further preferably arranged at the nose cone or at air flow means.

The hub comprises an interior hub space. The hub of the wind turbine comprises a hub wall. The interior hub space is defined as the cavity created by the hub wall. The ventilation system further comprises air flow means for directing air from outside of the hub towards the interior hub space, wherein the air flow means are arranged in proximity to the opening in the nose cone wall. Preferably, the air flow means direct air from outside the nose cone towards the interior hub space. Once the air enters the air flow means, the air is directed towards the interior space of the hub. The term "directing towards the hub" refers to the fact that the air flow means direct air into the direction of the hub. Preferably, the air flow means direct air not only towards the hub but into the interior hub space. Preferably, the air flow means comprises an air flow means wall. The air flow means of the ventilation system are disposed at a distance to the air diverting means.

Preferably, the air flow means are arranged adjacent to the nose cone wall. In particular, the air flow means are fixedly attached to the nose cone wall forming a connection area between the air flow means and the nose cone wall. Further preferably, the air flow means and the opening in the nose cone wall are arranged with respect to each other in such a way that air entering through the opening enters the interior space of the air flow means. The interior space of the air flow means is defined by the air flow means wall and an imaginary line connecting the opposing ends of the air flow means facing the nose cone wall.

According to a further embodiment of the invention, the air flow means comprise at least one air duct, in particular a flexible hose. The term "flexible" refers to the feature that the hose, which is preferably tube-shaped, changes its shape if sufficient external forces are applied. In addition or alternatively, the air flow means comprise a flow guiding element, in particular a baffle plate or a collar, which collects incoming air by deflection and guides it further into the interior space of the air flow means towards the interior hub space.

Preferably, the at least one air duct extends continuously from the opening in the nose cone wall to at least a hub opening in the hub wall. Through the hub opening in the hub wall air can enter into the interior hub space from outside the hub. Alternatively, the air flow means consist of several components such as air ducts which together extend continuously from the opening in the nose cone wall to at least a hub opening in the hub. Further preferably, the air flow means or the at least one air duct extend continuously beyond an opening in the hub protruding into the interior hub space.

According to a further embodiment, the air flow means comprise suction means for sucking air from the outside of the wind turbine generator through the opening in the nose cone wall into the air flow means. This suction means provide an active ventilation since air is actively sucked into the air flow means. Preferably, these suction means comprise a fan unit which creates a negative pressure at the entrance section of the air flow means or even further at an air inlet section of the air channel system. Further preferably, the suction means are adapted to control an air flow in the air flow means in dependence on at least one parameter. This at least one parameter is derived from measurements in the interior hub space. In particular, the parameter is a temperature or a temperature rate of the interior hub space. In this way, the ventilation of the interior hub space can be adjusted according to parameters in the hub. In particular, the ventilation could be adapted to a temperature change in the hub, especially a temperature increase which could result from enhanced loads on the electrical components in the hub. This embodiment is advantageous since it ensures a very effective ventilation of the hub by the capability of adapting its operation to the actual situation in the hub.

In another embodiment of the invention, the air flow means comprise filter means for filtering the air flowing from outside the nose cone towards the interior hub space. This filter means can for example be a simple filter mat or any other more sophisticated filter means such as an electrostatic filter. Preferably, the filter means comprise a desalination filter which is especially important for offshore wind turbine generators. Apart from salt, the filter means preferably remove dust or any other disturbing particles from the air.

Further preferably, the ventilation system comprises supporting means for mounting the air flow means. These supporting means which can itself be mounted anywhere at the wind turbine generator, such as the nose cone or the hub, mount the airflow means in a fixed position.

In another embodiment of the invention, the air diverting means, the air flow means and the nose cone together define an air channel system for directing air from the outside of the wind turbine generator towards the interior hub space. In particular, the outside of the wind turbine generator signifies the outside of the nose cone. The term "air channel system" signifies at least one air channel which leads from an air inlet section of the air channel system towards the interior hub space. In particular, the air channel system comprises multiple air channel sections which are preferably directed into different directions. These air channel sections are connected to each other in such a way that a continuous air flow through the air channel system is ensured. In this way, air is deflected and thus directed through the air channel system. By providing an air channel system which forces the air to multiple change its direction of flow, water and other disturbing particles are prevented from entering the interior hub space since they also have to change their flow direction significantly in order to move through the air channel system. Since the inertia of water or other disturbing particles is much higher than the one of air, water and other disturbing particles will most likely not reach the interior hub space. In contrast, the water will stick to the walls of the air channel system deflecting the air flow and the water will due to the arrangement of the air flow means, whose dimensions preferably decrease in main flow direction, move along the air flow means wall to water outlet means at which the water will flow out of the interior nose cone space.

In another embodiment of the invention, the air channel system is designed in such a way that it repeatedly deflects air entering the air channel system from the outside of the nose cone, further referred to as "incoming air". In this way, the direction of flow from incoming air is changed multiple times, i.e. at least two times. Further preferably, the air channel system repeatedly reverses the direction of flow of incoming air. Reversing the direction of flow signifies that the angle between the new direction of flow after deflection and the former direction of flow before deflection amounts to more than 90 degrees, further preferably at least 135 degrees and even more preferably about 180 degrees.

The hub comprises a rotation axis around which the hub rotates during operation of the wind turbine generator. This rotation axis is at the same time also the rotation axis of the nose cone. In a direction transverse to the rotation axis of the hub the dimensions of the air flow means decrease in main flow direction which is substantially parallel to the rotation axis of the hub. Further preferably, the transverse dimensions, in particular the diameter, of the air flow means taper in main flow direction. Further preferably, the angle of the air flow means wall in relation to the rotation axis of the hub is at least 5 degrees, more preferably at least 10 degrees and even more preferably at least 15 degrees. Due to the air diverting means a substantial part of the water contained in the air is prevented from moving further towards the interior hub space since it is deflected by the air diverting means. The water consecutively drips off onto the air flow means wall and moves along the air flow means wall against the main flow direction to water outlet means at which it drains off the interior hub cone space. If the air diverting means partly protrude to the outside of the nose cone, water can also drip off onto the nose cone wall and thus does not enter the interior nose cone space.

Further preferably, the air diverting means of the ventilation system comprises a first wall element and a second wall element. The first wall element is in particular arranged substantially perpendicular to the rotation axis of the hub while the second wall element is preferably disposed at an angle to the rotation axis of the hub so that in a direction transverse to the rotation axis of the hub the dimensions of the second wall element increase in main flow direction. The angle of the second wall element in relation to the rotation axis of the hub is preferably at least 20 degrees, further preferably at least 30 degrees, most preferably at least 40 degrees. The first wall element and the second wall element are preferably fixedly mounted to each other, further preferably in such a way that the first wall element forms a bottom and the second wall element forms a circumferential side wall. Furthermore, the air diverting means preferably comprise a third wall element which is fixedly mounted to the second wall element. The third wall element is preferably arranged substantially perpendicular to the rotation axis of the hub. Further preferably, the first, the second and the third wall element are formed integrally.

In a direction transverse to the rotation axis of the hub the dimensions of the air diverting means increase in main flow direction. In particular, the diameter of the second wall element of the air diverting means increases in main flow direction. In this way, the dimensions of the airflow means taper in opposite direction as the dimensions of the air diverting means. This signifies that the distance between the air diverting means and the air flow means wall, measured in a direction which is perpendicular to the hub rotation axis, changes. In fact, the distance between the air flow means wall and the air diverting means decreases in main flow direction. In particular, the deflection of air takes place in the area where the distance between the air flow means wall and the air diverting means reaches its minimum, preferably at the air is deflected at the air flow means wall in this area.

Further preferably, in a direction transverse to the rotation axis of the hub the maximum dimensions of the air diverting means exceed the maximum dimensions of the opening. One of the purposes of the air diverting means is to prevent water or any other disturbing particles which already entered the interior nose cone space from further moving towards the hub interior space. For this purpose, the maximum diameter of the air diverting means is at least 50 percent, further preferably at least 75 percent, even more preferably at least 85 percent, of the diameter of the air flow means measured at the position at which the air diverting means are disposed.

According to a further embodiment of the invention, the air flow means and/or the air diverting means comprise water deflection means for preventing water from entering the interior hub space. The water deflection means are preferably disposed at the air flow means wall of the air flow means. Further preferably, the water deflection means are designed as wall elements protruding into the interior space of the air flow means, preferably substantially perpendicular to the rotation axis of the hub with protrusion element being arranged substantially parallel to the rotation axis of the hub.

In another embodiment of the invention, the nose cone wall comprises water outlet means for providing a water outlet from the interior nose cone space. Preferably, the water outlet means are designed as small openings in the nose cone wall. The nose cone wall preferably comprises a part which protrudes over the connection area to the air flow means. This part of the nose cone wall can be a separate part of the nose cone wall which is arranged adjacent to the remaining part of the nose cone wall and is removably attached to it. This is especially advantageous for placing or exchanging the air diverting means in the interior space of the nose cone. Alternatively, the part of the nose cone wall protruding over the connection area and the remaining part of the nose cone wall are formed integrally or attached fixedly to each other. The water outlet means are arranged in the connection area of the air flow means and the nose cone wall.

### Brief Description of Drawings

Embodiments of the invention will be described below with reference to the following schematic figures:
[fig.1]Figure 1 is a longitudinal sectional view of part of a nose cone and part of a ventilation system;
[fig.2]Figure 2 is a longitudinal sectional view of a part of the nose cone and part of a ventilation system;
[fig.3]Figure 3 is a longitudinal sectional view of a part of the nose cone and part of a ventilation system;
[fig.4]Figure 4 is a longitudinal sectional view of a nose cone, a ventilation system according to Figure 3 and a hub.
[fig.5]Figure 5 is a longitudinal sectional view of a part of a nose cone and part of a ventilation system; and
[fig.6]Figure 6 is a perspective view of the part the nose cone and the part of the ventilation system of figure 5 with a longitudinal sectional cut in the right part of the figure.

### Description of Embodiments

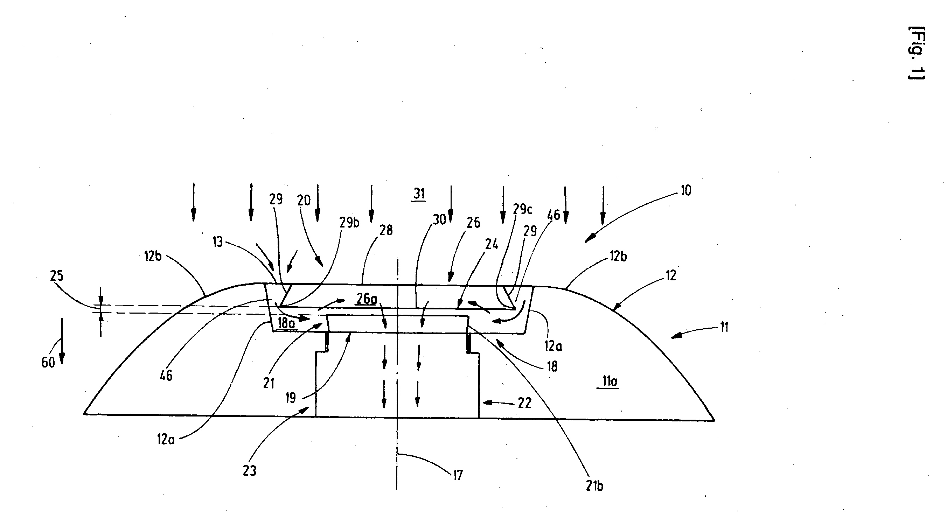

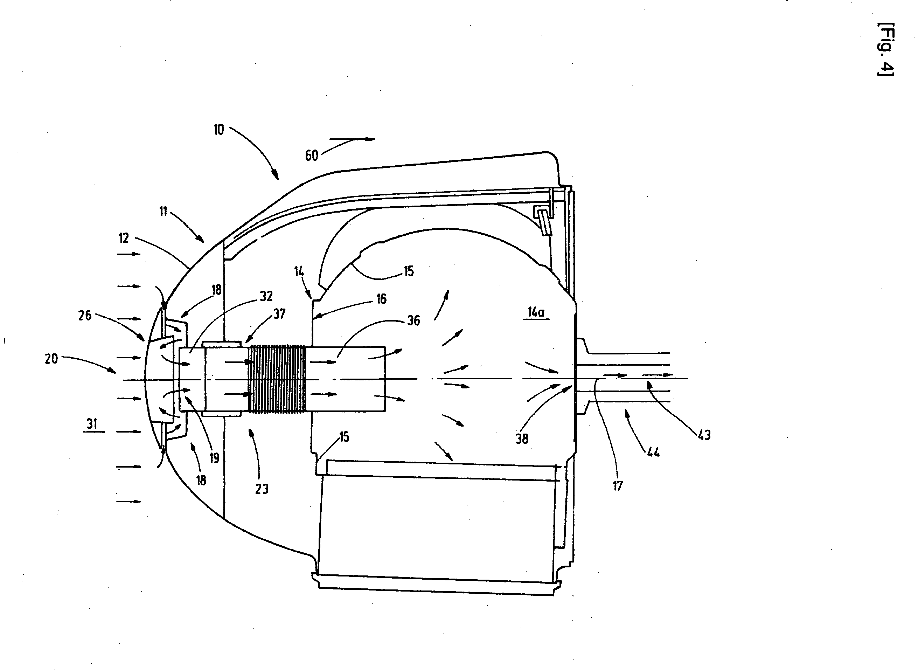

Figure 1 shows a longitudinal sectional view of a part of a wind turbine generator 10, namely part of a nose cone 11 and part of a ventilation system 20. The nose cone 11 comprises a nose cone wall 12. This nose cone wall 12 has a deepening 18 which is centrally arranged with regard to a rotation axis 17 of the nose cone 11. This rotation axis 17 coincides with the rotation axis 17 of the hub 14 (see Figure 4) which is not displayed in this figure. The deepening 18 of the nose cone wall 12 is designed as a circular indention in the nose cone wall 12. Within the deepening 18 an opening 19 in the nose cone wall 12 is disposed. The wall thicknesses of the different elements have been neglected in this figure.

A circular baffle plate 21 is circumferentially arranged outside of the opening 19 increasing in diameter in main air flow direction 60 which is substantially parallel to the rotation axis 17 of the nose cone 11 and the hub 14. From the interior space 11a of the nose cone 11, which is the cavity formed by the nose cone wall 12, an air duct 22 extends towards the interior hub space 14a (see Figure 4). The baffle plate 21 and the air duct 22 together form air flow means 23 guiding air towards the interior hub space 14a (see Figure 4), wherein the baffle plate 21 forms the entrance section 24 of the air flow means 23.

Air diverting means 26 are disposed proximate to the baffle plate 21, but at a distance 25 to the baffle plate 21. The air diverting means 26 comprise a first wall element 28 formed as a bottom and a second wall element 29 formed as a circumferential side wall which are fixedly attached to each other. The first wall element 28 and the second wall element 29 are arranged at an angle to each other which is more than 90 degrees. The air diverting means 26 and the air flow means 23 are designed rotationally symmetric to the rotation axis 17 of the nose cone 11 and the hub 14. The diameter of the air diverting means 26 increases in main flow direction 60. The air diverting means 26 cover the entire baffle plate 21. The air diverting means 26 are disposed in main air flow direction 60 in front of the baffle plate 21 and its dimensions in a direction transverse to the hub rotation axis 17 exceed the dimensions of the baffle plate 21.

The deepening 18 comprises an interior space 18a limited by a part 12a the nose cone wall 12 forming the deepening 18 and an imaginary line 13 connecting the opposing parts 12b of the nose cone wall 12 which do not form the deepening 18. The baffle plate 21 is entirely disposed in the interior space 18a of the deepening 18. The air diverting means 26 are also disposed entirely in the interior space 18a of the deepening 18 wherein the first wall element 28 of the air diverting means 26 ends at flush level with the imaginary line 13 connecting the opposing parts 12b of the nose cone wall 12 not forming the deepening 18 which are disposed adjacent to the part 12a of the nose cone wall forming the deepening.

The air diverting means 26 have an interior space 26a formed by the first wall element 28, the second wall element 29 and an imaginary line 30 connecting the ends 29b, 29c of the second wall element 29 facing the baffle plate 21. The baffle plate 21 is not disposed in the interior space 26a of the air diverting means 26 but at a distance 25 to the air diverting means 26.

The air diverting means 26, the deepening 18 and the baffle plate 21 together form an air channel system 46 which guides air from outside 31 of the nose cone 11 into the baffle plate 21. This air channel system 46 defines a flow path for incoming air from outside 31 of the nose cone 11 into the baffle plate 21 being part of the air flow means 23. The air enters the baffle plate 21 by being deflected at least twice by the air diverting means 26, by the deepening 18, more particular the part 12a of the nose cone wall 12 forming the deepening 18, and by the baffle plate 21, in particular the outer wall 21b of the baffle plate 21, so that the air has to repeatedly reverse its flow direction until it enters the baffle plate 21. This change of flow direction is shown by the arrows in Figure 1 which depict the typical path for air entering the air flow means 23 from outside 31 the nose cone 11. Even though the air multiple changes its direction of flow the main direction of flow 60 is substantially parallel to the rotation axis 17 of the hub 14 and the nose cone 11.

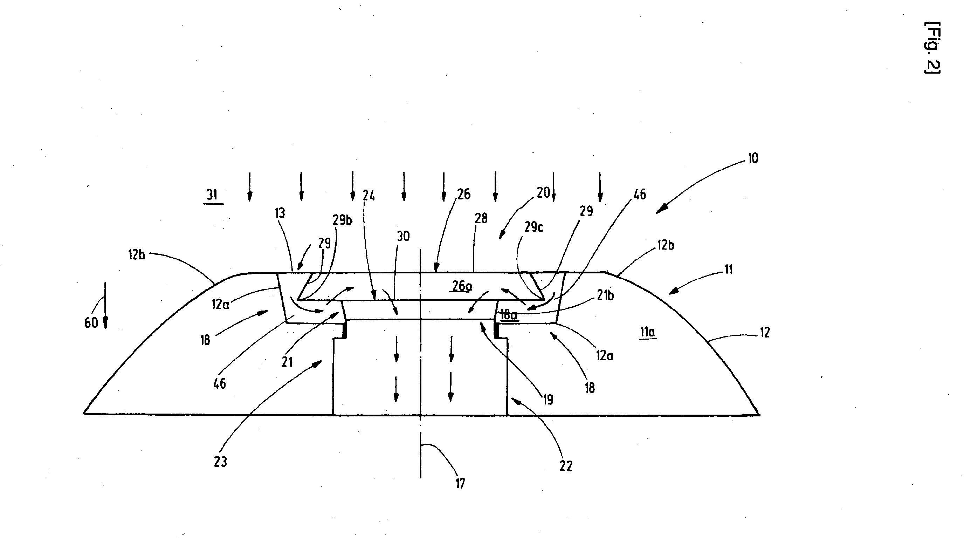

In Figure 2 a longitudinal sectional view of a part of another wind turbine generator 10, namely part of another nose cone 11 and a ventilation system 20, is shown. The nose cone 11 and the ventilation system 20 is basically designed and arranged as shown in figure 1 so that reference is made to the corresponding description. The only difference to the embodiment of Figure 1 is that baffle plate 21 protrudes further into the interior space 18a of the deepening 18. In fact, the baffle plate 21 ends at flush level with the imaginary line 30 connecting the ends 29b, 29c of the second wall element 29 of the air diverting means 26. In this way, the baffle plate 21 is disposed conterminous to the air diverting means 26. In any way, the baffle plate 21 does not extend into the interior space 26a of the air diverting means 26.

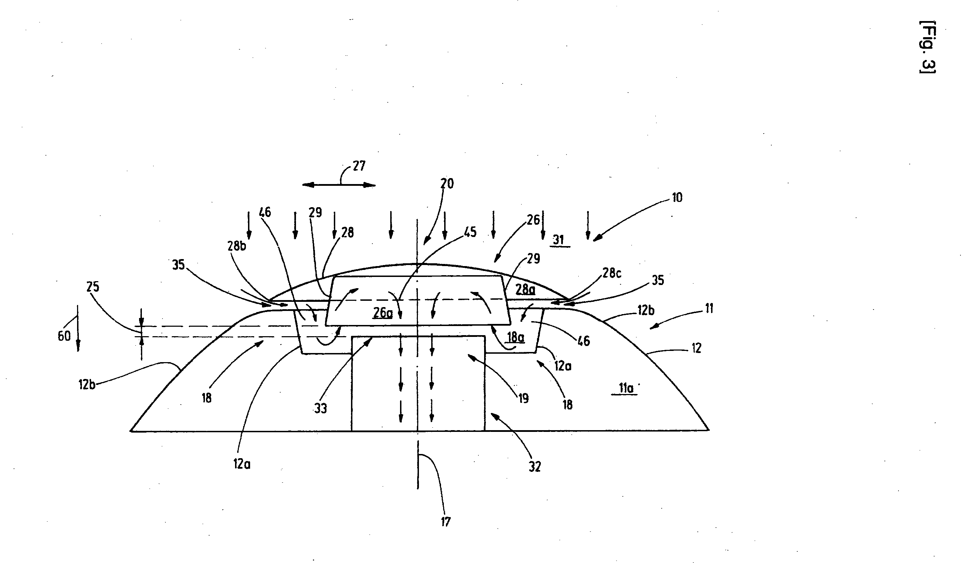

Figure 3 displays a longitudinal sectional view of a part of a wind turbine generator 10, namely part of another nose cone 11 and a ventilation system 20. The nose cone 11 is basically designed and arranged as shown in figure 1 so that reference is made to the corresponding description. In the opening 19 of the deepening 18 a first air duct 32 is disposed which is directed towards the interior hub space 14a. The first air duct 32 protrudes into the interior space 18a of the deepening 18 so that the entrance section 33 of the first air duct 32 is arranged in the interior space 18a of the deepening 18. The rotationally symmetric air diverting means 26 comprise a plate-shaped first wall element 28 and a second wall element 29 being designed as a circumferential side wall. The first wall element 28 and the second wall element 29 are fixedly connected to each other in such a way that part of the second wall element 29 is disposed in an interior space 28a of the first wall element 28 being formed by the first wall element 28 and an imaginary line 45 connecting the ends 28b, 28c of the first wall element 28 facing the first air duct 32. The first wall element 28 protrudes over the second wall element 29 in radial direction 27 with regard to the rotation axis 17 of the hub 14. In fact, the air diverting means 26 covers the entire deepening 18 of the nose cone wall 12. A part of the air diverting means 26 are disposed in main air flow direction 60 in front of the deepening 18 and its dimensions in a direction transverse to the hub rotation axis 17 exceed the dimensions of the deepening 18. The entrance section 33 of the first air duct 32 is arranged at a distance 25 to the air diverting means 26 and is not arranged in an interior space 26a of the air diverting means 26.

The air diverting means 26 and the nose cone 11 form an air inlet section 35 for air to enter the air channel system 46 formed by the air diverting means 26, the deepening 18 and the entrance section 33 of the first air duct 32. This air inlet section 35 is disposed substantially perpendicular to the rotation axis 17 of the nose cone 11 and the hub 14. Figure 4 shows a longitudinal sectional view of part of a wind turbine generator 10, namely a ventilation system 20 according to Figure 3, a nose cone 11, and a hub 14. The air flow means 23 comprise a first air duct 32, a second air duct 36 and a combined filtering and suction means 37. Together the first air duct 32, the second air duct 36 and the combined filtering and suction means 37 extend continuously from the opening 19 in the nose cone wall 12 through a hub opening 16 in the hub wall 15 into the interior space 14a of the hub 14. The ventilation system 20 comprises outlet means 38 which provide an air outlet for heated air from the interior hub space 14a to an outside of the hub 14. These air outlet means 38 are formed by a cavity 43 of a hollow main shaft 44. The outlet means 38 allow heated air an escape from the interior hub space 14a while the opening 19 in the deepening 18 and the air flow means 23 provide an entrance for cool air from outside 31 of the nose cone 11. The change of flow direction is depicted by the arrows in Figure 4 which show that the main flow direction 60 is substantially parallel to the rotation axis 17 of the hub 14 and the nose cone 11.

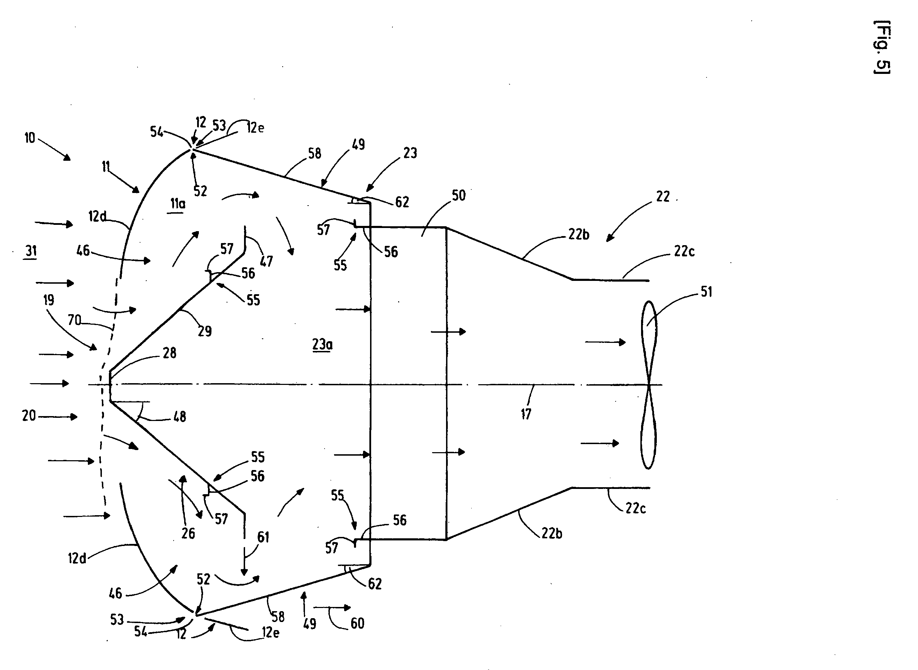

In figure 5, a longitudinal sectional view of a part of a wind turbine generator 10, namely a part of a nose cone 11 and a ventilation system 20, is shown. The nose cone 11 comprises a nose cone wall 12. This nose cone wall 12 has an opening 19 which is centrally arranged with regard to a rotation axis 17 of the nose cone 11. This rotation axis 17 coincides with the rotation axis of the hub 14 which is not displayed in this figure. The opening 19 in the nose cone wall 12 is designed circular. The wall thicknesses of the different elements in figure 5 have been neglected.

In the interior nose cone space 11a the air diverting means 26 are substantially disposed. Only a slight part of the air diverting means 26 protrudes to the outside 31 of the nose cone 11. The air diverting means 26 comprise a first wall element 28 formed as a bottom, a second wall element 29 formed as a circumferential side wall and a third wall element 47 formed as a circumferential edge. The first wall element 28 is arranged perpendicular to hub rotation axis 17. The first wall element 28, the second wall element 29 and the third wall element 47 are formed integrally. The air diverting means 26 are formed rotationally symmetric to the hub rotation axis 17. The first wall element 28 and the second wall element 29 are arranged at an angle to each other which is approximately 120 degrees. The diameter of the second wall element 29 increases in main flow direction 60 which is substantially parallel to the hub rotation axis 17. In particular, the angle 48 which the second wall element 29 forms relative to the hub rotation axis 17 is about 40 degrees. The third wall element 47 is arranged perpendicular to the rotation axis 17 of the hub 14.

The ventilation system 20 further comprises air flow means 23 which are designed rotationally symmetric to the rotation axis 17 of hub 14. The air flow means 23 comprise a baffle-shaped collar 49. The diameter of this collar 49 tapers in main flow direction 60. The angle 62 which the wall of the collar 49 forms with the rotation axis 17 of the hub 14 is about 15 degrees. In addition, the air flow means 23 comprise filter means 50 for filtering air flowing in the interior space 23a of the air flow means 23 towards the interior hub space 14a (not shown in this figure). Furthermore, the air flow means 23 comprise an air duct 22 further guiding air towards the interior space of the hub. Another component of the air flow means 23 is a fan 51 which actively sucks air from outside 31 the nose cone 11 through the opening 19 in the nose cone wall 12 into the air flow means 23. The fan 51 is disposed in the air duct 22. The diameter of the air duct 22 also tapers in main flow direction 60 in a first section 22b and is constant in a second section 22c which is integrally formed with the first section 22c. The collar 49, the filter means 50 and the air duct 22 are adjacently arranged in such a way that they form a continuous air flow means 23 for guiding air towards the interior hub space 14a.

The air flow means 23, in particular the collar 49, is mounted to the nose cone wall 12 in a connection area 52. In this connection area 52 water outlet means 53 are arranged which are designed as small openings 54 in the nose cone wall 12. A circumferential part 12d of the nose cone wall 12 protrudes over the connection area 52. The air flow means 23 and the air diverting means 26 comprise water deflection means 55 for preventing water contained in the air from moving further towards interior hub space 14a. The water deflection means 55 are designed as a circumferential wall element 56 protruding to the interior space 23a of the air flow means 23 with a protrusion element 57 which is arranged perpendicular to the wall element 56. Water contained in the air which enters the interior nose cone space 11 a is deflected by the water deflection means 55. At the water deflection means 55 which are mounted at the air diverting means 26 the deflected water drips off onto the air flow means wall 58 as it is depicted by the arrow 61. Since the diameter of the air flow means 23 decreases in main flow direction 60, the water dripped on the air flow means wall 58 consecutively moves along the air flow means wall 58 against the main flow direction 60 and is drained by the water outlet means 53. From the water deflection means 55 which are mounted at the air flow means wall 58 the deflected water can directly move along the air flow means wall 58 and escape the interior nose cone space 11a by the water outlet means 53. Furthermore, water 70 contained in the air which has hit the part 12d of the nose cone wall 12 protruding over the opening 19 can drip off onto the part of the air diverting means 26 protruding to the outside 31 of the nose cone 11 and will thus not enter the interior nose cone space 11a.

The air diverting means 26 and the air flow means 23 together form an air channel system 46 which guides air from outside 31 of the nose cone 11 towards the filter means 50. This air channel system 46 defines a flow path for incoming air from outside 31 of the nose cone 11. The air moves towards the filter means 50 by being deflected at least twice by the air diverting means 26 and the air flow means, so that the air has to repeatedly change its flow direction until it reaches the filter means 50. This change of flow direction is shown by the arrows in Figure 5 which depict the typical path for air entering the nose cone space 11a. Even though the air changes its direction of flow multiple times, the main direction of flow 60 is substantially parallel to the rotation axis 17 of the hub 14 and the nose cone 11.

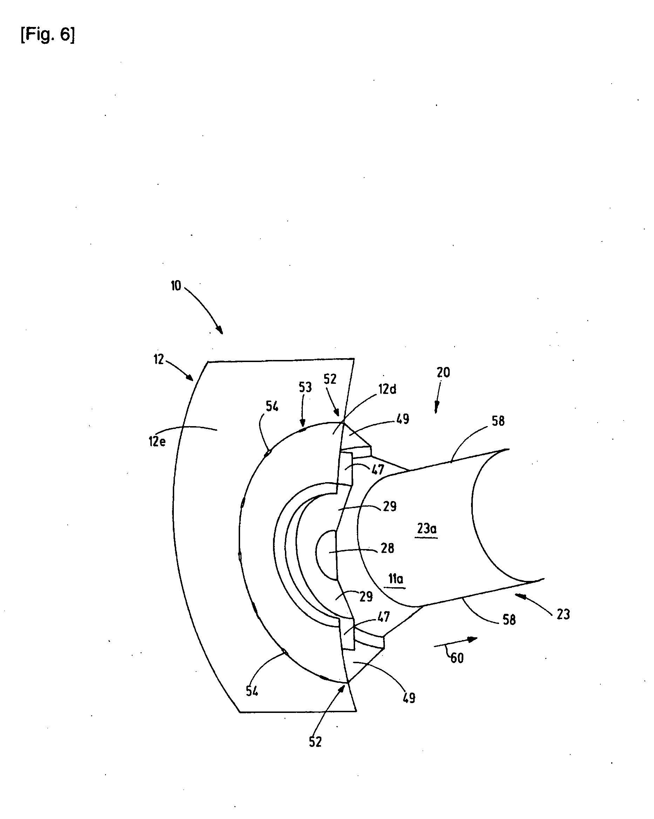

In figure 6 a perspective view of the part of the wind turbine generator 10, namely the part of the nose cone 11 and the ventilation system 20 of figure 5, is shown with a longitudinal sectional cut in the right part of the figure. In figure 6 the filter means 50, the water deflection means 55 and the first section 22b of the air duct 22 have been neglected. The water outlet means 53 are designed as small openings 54 in the nose cone wall 12. The circumferential part 12d of the nose cone wall 12 protruding over the connection area 52 to the air flow means 23 is removable attached to the remaining part 12e of the nose cone wall 12 in the connection area 52 to the air flow means 23.

## Claims

1. A wind turbine generator (10) comprising
a hub (14) with an interior hub space (14a),
a nose cone (11) with a nose cone wall (12), and
a ventilation system (20) for ventilating the hub (14) of the wind turbine generator (10),
wherein a deepening (18) in the nose cone wall (12) is provided,
wherein the ventilation system (20) comprises air flow means (23) for directing air from outside of the hub (14) towards the interior hub space (14a), said air flow means (23) comprising an entrance section (24), wherein the ventilation system (20) further comprises air diverting means (26) covering the entrance section (24) of the air flow means (23),
wherein the air flow means (23) are disposed at a distance to the air diverting means (26), such that the air flow means (23) are not disposed in an interior space (26a) of the air diverting means (26), or wherein the air flow means (23) are disposed conterminous to the air diverting means (26) but not in the interior space (26a) of the air diverting means (26), such that the entrance section (24) of the air flow means (23) ends at flush level at an imaginary line (30) at the end (29b, 29c) of the air diverting means (26) facing the entrance section (24) of the air flow means (23), and
wherein the deepening (18), the entrance section (24) of the air flow means (23) and the air diverting means (26) together define an air channel system (46) for directing air from the outside of the wind turbine generator (10) into the air flow means (23).

2. The wind turbine generator (10) according to claim 1,
wherein the air channel system (46) is designed in such a way that it repeatedly deflects the air entering the air channel system (46) from the outside (31) of the nose cone (11).

3. The wind turbine generator (10) according to claim 1,
wherein the air flow means (23) comprise at least one air duct (32), in particular a flexible hose, arranged in an opening (19) in the nose cone wall (12), and/or
wherein the air flow means (23) comprise a flow guiding element, in particular a baffle plate or a collar, arranged outside of an opening (19) in the nose cone wall (12).

4. The wind turbine generator (10) according to claim 3,
wherein the at least one air duct extends (32) continuously from the opening (19) in the nose cone wall (12) to at least a hub opening (16) in the hub wall (15).

5. The wind turbine generator (10) according to claim 3,
wherein the opening (19) is disposed within the deepening (18) of the nose cone wall (12).

6. The wind turbine generator (10) according to claim 1,
wherein the air flow means (23) comprise suction means (37) for sucking air from the outside of the wind turbine generator (10) into the air flow means (23).

7. The wind turbine generator (10) according to claim 6,
wherein the suction means (37) are adapted to control an air flow in the air flow means (23) depending on a parameter derived from measurements in the interior hub space (14a), wherein the parameter is in particular a temperature or a temperature rate of the hub interior space (14a).

8. The wind turbine generator (10) according to claim 1,
wherein the deepening (18) of the nose cone wall (12) is arranged in proximity to the entrance section (24) of the air flow means (23).

9. The wind turbine generator (10) according to claim 1,
wherein the deepening (18) of the nose cone (11) comprises an interior space (18a) and wherein the air diverting means (26) are at least partly disposed in the interior space (18a) of the deepening (18).

10. The wind turbine generator (10) according to claim 1,
wherein the deepening (18) of the nose cone (11) comprises an interior space (18a) and wherein the entrance section (24) of the air flow means (23) protrudes into the interior space (18a) of the deepening (18) of the nose cone wall (12).

11. The wind turbine generator (10) according to claim 1,
wherein the hub (14) comprises a rotation axis (17),
wherein the air diverting means (26) and the nose cone wall (12) define an air inlet section (35) of the air channel system (46), and
wherein said air inlet section (35) is disposed substantially perpendicular to the rotation axis (17) of the hub (14).

12. The wind turbine generator (10) according to claim 1,
wherein the ventilation system (20) comprises outlet means (38) for providing an air outlet from the interior hub space (14a).

13. A wind turbine generator (10) comprising
a hub (14),
a nose cone (11) with a nose cone wall (12) and an interior nose cone space (11a), and
a ventilation system (20) for ventilating the hub (14) of the wind turbine generator (10),
wherein an opening (19) in the nose cone wall (12) is provided,
wherein the ventilation system comprises (20) air diverting means (26) covering the opening (19) in the nose cone wall (12) and
wherein the air diverting means (26) are at least partly disposed in the interior nose cone space (11a),
wherein the hub (14) comprises an interior hub space (14a),
wherein the ventilation system (20) further comprises air flow means (23) for directing air from outside of the hub (14) towards the interior hub space (14a), wherein the air flow means (23) are arranged in proximity to the opening (19) in the nose cone wall (12),
wherein the hub (14) comprises a rotation axis (17),
wherein in a direction transverse to the rotation axis (17) of the hub (14) the dimensions of the air flow means (23) decrease in main flow direction (60), and
wherein in a direction transverse to the rotation axis (17) of the hub (14) the dimensions of the air diverting means (23) increase in main flow direction (60).

14. The wind turbine generator (10) according to claim 13,
wherein a part of the air diverting means (26) protrudes to an outside (31) of the nose cone (11).

15. The wind turbine generator (10) according to claim 13,
wherein the air diverting means (26), the air flow means (23) and the nose cone (11) together define an air channel system (46) for directing air from the outside of the wind turbine generator (10) towards the interior hub space (14a).

16. The wind turbine generator (10) according to claim 13, wherein the air flow means (23) and/or the air diverting means (26) comprise water deflection means (55) for preventing water from entering the interior hub space (14a).

17. The wind turbine generator (10) according to claim 13, wherein the nose cone wall (12) comprises water outlet means (53) for providing a water outlet from the interior nose cone space (11a).

## Patentansprüche

1. Windturbinengenerator (10), umfassend:
eine Nabe (14) mit einem inneren Nabenraum (14a),
einen Nasenkonus (11) mit einer Nasenkonuswand (12), und
ein Lüftungssystem (20) zum Lüften der Nabe (14) des Windturbinengenerators (10),
wobei eine Vertiefung (18) in der Nasenkonuswand (12) bereitgestellt ist,
wobei das Lüftungssystem (20) Luftdurchflussmittel (23) umfasst, um die Luft von außerhalb der Nabe (14) in das Innere des Nabenraums (14a) zu lenken, wobei die Luftdurchflussmittel (23) einen Eingangsabschnitt (24) umfassen,
wobei das Lüftungssystem (20) ferner Luftumlenkmittel (26) umfasst, die den Eingangsabschnitt (24) der Luftdurchflussmittel (23) bedecken,
wobei die Luftdurchflussmittel (23) in einem Abstand von den Luftumlenkmitteln (26) derart angeordnet sind, dass die Luftdurchflussmittel (23) nicht in einem inneren Raum (26a) der Luftumlenkmittel (26) angeordnet sind, oder wobei die Luftdurchflussmittel (23) angrenzend zu den Luftumlenkmitteln (26), aber nicht in dem inneren Raum (26a) der Luftumlenkmittel (26) derart angeordnet sind, dass der Eingangsabschnitt (24) der Luftdurchflussmittel (23) bündig an der imaginären Linie (30) an dem Ende (29b, 29c) der Luftumlenkmittel (26) endet, die dem Eingangsabschnitt (24) der Luftdurchflussmittel (23) zugewandt sind, und
wobei die Vertiefung (18), der Eingangsabschnitt (24) der Luftdurchflussmittel (23) und die Luftumlenkmittel (26) zusammen ein Luftkanalsystem (46) definieren, um die Luft von außerhalb des Windturbinengenerators (10) in die Luftdurchflussmittel (23) zu lenken.

2. Windturbinengenerator (10) nach Anspruch 1,
wobei das Luftkanalsystem (46) derart ausgelegt ist, dass es die Luft, die in das Luftkanalsystem (46) von außerhalb (31) des Nasenkonus (11) eintritt, wiederholt ablenkt.

3. Windturbinengenerator (10) nach Anspruch 1,
wobei die Luftdurchflussmittel (23) mindestens eine Luftleitung (32) umfassen, insbesondere einen flexiblen Schlauch, der in einer Öffnung (19) in der Nasenkonuswand (12) angeordnet ist, und/oder
wobei die Luftdurchflussmittel (23) ein Durchflussführungselement umfassen, insbesondere eine Ablenkplatte oder einen Kranz, der (die/das) außerhalb einer Öffnung (19) in der Nasenkonuswand (12) angeordnet ist.

4. Windturbinengenerator (10) nach Anspruch 3,
wobei sich die mindestens eine Luftleitung (32) kontinuierlich von der Öffnung (19) in der Nasenkonuswand (12) mindestens zu einer Nabenöffnung (16) in der Nabenwand (15) erstreckt.

5. Windturbinengenerator (10) nach Anspruch 3,
wobei die Öffnung (19) innerhalb der Vertiefung (18) der Nasenkonuswand (12) angeordnet ist.

6. Windturbinengenerator (10) nach Anspruch 1,
wobei die Luftdurchflussmittel (23) Ansaugmittel (37) zum Ansaugen von Luft von außerhalb des Windturbinengenerators (10) in die Luftdurchflussmittel (23) umfassen.

7. Windturbinengenerator (10) nach Anspruch 6,
wobei die Ansaugmittel (37) dafür ausgelegt sind, einen Luftdurchfluss in den Luftdurchflussmitteln (23) in Abhängigkeit von einem Parameter, der aus Messungen in dem inneren Nabenraum (14a) abgeleitet worden ist, zu steuern, wobei der Parameter insbesondere eine Temperatur oder eine Temperaturhöhe des inneren Nabenraums (14a) ist.

8. Windturbinengenerator (10) nach Anspruch 1,
wobei die Vertiefung (18) der Nasenkonuswand (12) in der Nähe des Eingangsabschnitts (24) der Luftdurchflussmittel (23) angeordnet ist.

9. Windturbinengenerator (10) nach Anspruch 1,
wobei die Vertiefung (18) des Nasenkonus (11) einen inneren Raum (18a) umfasst und wobei die Luftumlenkmittel (26) mindestens teilweise in dem inneren Raum (18a) der Vertiefung (18) angeordnet sind.

10. Windturbinengenerator (10) nach Anspruch 1,
wobei die Vertiefung (18) des Nasenkonus (11) einen inneren Raum (18a) umfasst und wobei der Eingangsabschnitt (24) der Luftdurchflussmittel (23) in den inneren Raum (18a) der Vertiefung (18) der Nasenkonuswand (12) hervorsteht.

11. Windturbinengenerator (10) nach Anspruch 1,
wobei die Nabe (14) eine Drehachse (17) umfasst,
wobei die Luftumlenkmittel (26) und die Nasenkonuswand (12) einen Lufteinlassabschnitt (35) des Luftkanalsystems (46) definieren, und
wobei der Lufteinlassabschnitt (35) im Wesentlichen senkrecht zu der Drehachse (17) der Nabe (14) angeordnet ist.

12. Windturbinengenerator (10) nach Anspruch 1,
wobei das Lüftungssystem (20) Auslassmittel (38) umfasst, um einen Luft-auslass von dem inneren Nabenraum (14a) bereitzustellen.

13. Windturbinengenerator (10), der umfasst:
eine Nabe (14),
einen Nasenkonus (11) mit einer Nasenkonuswand (12) und mit einem inneren Nasenkonusraum (11a), und
ein Lüftungssystem (20) zum Lüften der Nabe (14) des Windturbinengenerators (10),
wobei eine Öffnung (19) in der Nasenkonuswand (12) bereitgestellt ist,
wobei das Lüftungssystem (20) Luftumlenkmittel (26) umfasst, die die Öffnung (19) in der Nasenkonuswand (12) bedecken, und
wobei die Luftumlenkmittel (26) mindestens teilweise in dem inneren Nasenkonusraum (11a) angeordnet sind,
wobei die Nabe (14) einen inneren Nabenraum (14a) umfasst,
wobei das Lüftungssystem (20) ferner Luftdurchflussmittel (23) umfasst, um die Luft von außerhalb der Nabe (14) in das Innere des Nabenraums (14a) zu lenken, wobei die Luftdurchflussmittel (23) in der Nähe zu der Öffnung (19) in der Nasenkonuswand (12) angeordnet sind,
wobei die Nabe (14) eine Drehachse (17) umfasst,
wobei in einer Richtung quer zu der Drehachse (17) der Nabe (14) die Dimensionen der Luftdurchflussmittel (23) in der Hauptdurchflussrichtung (60) abnehmen,
wobei in einer Richtung quer zu der Drehachse (17) der Nabe (14) die Dimensionen der Luftumlenkmittel (26) in der Hauptdurchflussrichtung (60) zunehmen.

14. Windturbinengenerator (10) nach Anspruch 13,
wobei ein Teil der Luftumlenkmittel (26) zu einer Außenseite (31) des Nasenkonus (11) hervorsteht.

15. Windturbinengenerator (10) nach Anspruch 13,
wobei die Luftumlenkmittel (26), die Luftdurchflussmittel (23) und der Nasenkonus (11) zusammen ein Luftkanalsystem (46) definieren, um die Luft von außerhalb des Windturbinengenerators (10) in den inneren Nabenraum (14a) zu lenken.

16. Windturbinengenerator (10) nach Anspruch 13, wobei die Luftdurchflussmittel (23) und/oder die Luftumlenkmittel (26) Wasserablenkungsmittel (55) umfassen, um zu verhindern, dass Wasser in den inneren Nabenraum (14a) eintritt.

17. Windturbinengenerator (10) nach Anspruch 13, wobei die Nasenkonuswand (12) Wasserauslassmittel (53) umfasst, um einen Wasserauslass von dem inneren Nasenkonusraum (11a) bereitzustellen.

## Revendications

1. Générateur de turbine éolienne (10) comprenant
un moyeu (14) avec un espace de moyeu interne (14a),
un cône d'entrée (11) avec une paroi de cône d'entrée (12), et
un système de ventilation (20) pour la ventilation du moyeu (14) du générateur de turbine éolienne (10),
dans lequel un creux (18) dans la paroi de cône d'entrée (12) est fourni,
dans lequel le système de ventilation (20) comprend des moyens de circulation d'air (23) pour envoyer de l'air provenant de l'extérieur du moyeu (14) vers l'espace de moyeu interne (14a), lesdits moyens de circulation d'air (23) comprenant une section d'entrée (24),
dans lequel le système de ventilation (20) comprend en outre des moyens de déviation d'air (26) recouvrant la section d'entrée (24) des moyens de circulation d'air (23),
dans lequel les moyens de circulation d'air (23) sont disposés à une distance par rapport aux moyens de déviation d'air (26) de manière à ce que les moyens de circulation d'air (23) ne soient pas disposés dans un espace interne (26a) des moyens de déviation d'air (26), ou dans lequel les moyens de circulation d'air (23) sont disposés au voisinage des moyens de déviation d'air (26), mais pas dans l'espace interne (26a) des moyens de déviation d'air (26), de manière à ce que la section d'entrée (24) des moyens de circulation d'air (23) se termine à un niveau à fleur à une ligne imaginaire (30) à l'extrémité (29b, 29c) des moyens de déviation d'air (26) faisant face à la section d'entrée (24) des moyens de circulation d'air (23), et
dans lequel le creux (18), la section d'entrée (24) des moyens de circulation d'air (23) et les moyens de déviation d'air (26) définissent ensemble un système de canal d'air (46) pour envoyer de l'air depuis l'extérieur du générateur de turbine éolienne (10) jusqu'à l'intérieur des moyens de circulation d'air (23).

2. Générateur de turbine éolienne (10) selon la revendication 1,
dans lequel le système de canal d'air (46) est conçu d'une manière à défléchir de manière répétée l'air entrant dans le système de canal d'air (46) à partir de l'extérieur (31) du cône d'entrée (11).

3. Générateur de turbine éolienne (10) selon la revendication 1,
dans lequel les moyens de circulation d'air (23) comprennent au moins un conduit d'air (32), en particulier un tuyau flexible, disposé dans une ouverture (19) dans la paroi du cône d'entrée (12), et/ou
dans lequel les moyens de circulation d'air (23) comprennent un élément de guidage de flux, en particulier une tôle-chicane ou un collier, disposé(e) à l'extérieur d'une ouverture (19) dans la paroi de cône d'entrée (12).

4. Générateur de turbine éolienne (10) selon la revendication 3,
dans lequel cet au moins un conduit d'air s'étend (32) en continu depuis l'ouverture (19) dans la paroi de cône d'entrée (12) jusqu'à au moins une ouverture de moyeu (16) dans la paroi du moyeu (15).

5. Générateur de turbine éolienne (10) selon la revendication 3,
dans lequel l'ouverture (19) est disposée à l'intérieur du creux (18) de la paroi du cône d'entrée (12).

6. Générateur de turbine éolienne (10) selon la revendication 1,
dans lequel les moyens de circulation d'air (23) comprennent des moyens d'aspiration (37) pour aspirer l'air depuis l'extérieur du générateur de turbine éolienne (10) jusqu'à l'intérieur des moyens de circulation d'air (23).

7. Générateur de turbine éolienne (10) selon la revendication 6,
dans lequel les moyens d'aspiration d'air (37) sont adaptés pour contrôler un flux d'air dans les moyens de circulation d'air (23) en fonction d'un paramètre dérivé de mesures dans l'espace de moyeu interne (14a), dans lequel le paramètre est en particulier une température ou un gradient de température de l'espace interne du moyeu (14a).

8. Générateur de turbine éolienne (10) selon la revendication 1,
dans lequel le creux (18) de la paroi de cône d'entrée (12) est disposé à proximité de la section d'entrée (24) des moyens de circulation d'air (23).

9. Générateur de turbine éolienne (10) selon la revendication 1,
dans lequel le creux (18) du cône d'entrée (11) correspond à un espace interne (18a), et dans lequel les moyens de déviation d'air (26) sont au moins partiellement disposés dans l'espace interne (18a) du creux (18).

10. Générateur de turbine éolienne (10) selon la revendication 1,
dans lequel le creux (18) du cône d'entrée (11) comprend un espace interne (18a), et dans lequel la section d'entrée (24) des moyens de circulation d'air (23) dépasse dans l'espace interne (18a) du creux (18) de la paroi de cône d'entrée (12).

11. Générateur de turbine éolienne (10) selon la revendication 1,
dans lequel le moyeu (14) comprend un axe de rotation (17),
dans lequel les moyens de déviation d'air (26) et la paroi de cône d'entrée (12) définissent une section d'entrée d'air (35) du système de canal d'air (46), et
dans lequel ladite section d'entrée d'air (35) est disposée sensiblement perpendiculairement à l'axe de rotation (17) du moyeu (14).

12. Générateur de turbine éolienne (10) selon la revendication 1,
dans lequel le système de ventilation (20) comprend des moyens de sortie (38) pour fournir une sortie d'air à partir de l'espace de moyeu interne (14a).

13. Générateur de turbine éolienne (10) comprenant
un moyeu (14),
un cône d'entrée (11) avec une paroi de cône d'entrée (12) et un espace de cône d'entrée interne (11a), et
un système de ventilation (20) pour ventiler le moyeu (14) du générateur de turbine éolienne (10),
dans lequel une ouverture (19) dans la paroi de cône d'entrée (12) est fournie,
dans lequel le système de ventilation comprend (20) des moyens de déviation d'air (26) recouvrant l'ouverture (19) dans la paroi de cône d'entrée (12), et
dans lequel les moyens de déviation d'air (26) sont au moins partiellement disposés dans l'espace de cône d'entrée interne (11a),
dans lequel le moyeu (14) comprend un espace de moyeu interne (14a), dans lequel le système de ventilation (20) comprend en outre des moyens de circulation d'air (23) pour envoyer de l'air depuis l'extérieur du moyeu (14) vers l'espace de moyeu interne (14a), dans lequel les moyens de circulation d'air (23) sont disposés à proximité de l'ouverture (19) dans la paroi de cône d'entrée (12),
dans lequel le moyeu (14) comprend un axe de rotation (17),
dans lequel, dans une direction transversale à l'axe de rotation (17) du moyeu (14), les dimensions des moyens de circulation d'air (23) se réduisent dans la direction de flux principale (60), et
dans lequel, dans une direction transversale à l'axe de rotation (17) du moyeu (14), les dimensions des moyens de déviation d'air (26) augmentent dans la direction de flux principale (60).

14. Générateur de turbine éolienne (10) selon la revendication 13,
dans lequel une partie des moyens de déviation d'air (26) dépasse vers un extérieur (31) du cône d'entrée (11).

15. Générateur de turbine éolienne (10) selon la revendication 13,
dans lequel les moyens de déviation d'air (26), les moyens de circulation d'air (23) et le cône d'entrée (11) définissent ensemble un système de canal d'air (46) pour envoyer de l'air depuis l'extérieur du générateur de turbine éolienne (10) vers l'espace de moyeu interne (14a).

16. Générateur de turbine éolienne (10) selon la revendication 13, dans lequel les moyens de circulation d'air (23) et/ou les moyens de déviation d'air (26) comprennent des moyens de déviation d'eau (55) pour éviter que de l'eau entre dans l'espace de moyeu interne (14a).

17. Générateur de turbine éolienne (10) selon la revendication 13, dans lequel la paroi de cône d'entrée (12) comprend des moyens de sortie d'eau (53) pour fournir une sortie d'eau à partir de l'espace de cône d'entrée interne (11a).
